# EUROPEAN PATENT APPLICATION

(11) **EP 2 832 885 A1**
(43) Date of publication of application: **04.02.2015**
(21) Application number: 13769370.1
(22) Date of filing: 25.03.2013
(51) Int. Cl.: C22C 38/00, C21C 7/00, C21C 7/04, C21C 7/06, C22C 38/60

(54) **METHOD FOR PRODUCING MOLD STEEL, MOLD STEEL, METHOD OF PRODUCING PRE-HARDENED MOLD MATERIAL, AND PRE-HARDENED MOLD MATERIAL**

(30) Priority: 28.03.2012 JP 2012073095
(71) Applicant: Hitachi Metals, Ltd., Tokyo 105-8614 (JP)
(72) Inventor: AYABE, Yousuke, Yasugi-shi Shimane 692-8601 (JP); NAKATSU, Hideshi, Tokyo 105-8614 (JP); TAMURA, Yasushi, Yasugi-shi Shimane 692-8601 (JP); MISHIMA, Setsuo, Yasugi-shi Shimane 692-8601 (JP); INTOH, Yuuki, Yasugi-shi Shimane 692-8601 (JP)
(74) Representative: Adamson Jones
(86) International application number: PCT/JP2013/058600
(87) International publication number: WO 2013/146689

(57) **Abstract**

A method of producing a mold steel, the method including a first process of preparing a molten steel A that is obtained after vacuum refining and has a component composition including from 0.005% to 0.1% by mass of C, from 1.0% to 5.0% by mass of Ni, from 3.0% to 8.0% by mass of Cr, more than 0% but less than or equal to 2.0% by mass of Mo, more than 0% but less than or equal to 3.5% by mass of Cu, and more than 0% but less than or equal to 2.0% by mass ofAl, in which an amount of O is 0.005% by mass or less and an amount of N is 0.03% by mass or less; a second process of reducing the amount of O and the amount of N in the molten steel A, by slag refining the molten steel A, to obtain a molten steel B; and a third process of casting the molten steel B, is provided.

## Description

### Technical Field

The invention relates to a method of producing a steel best suited for molding products that require high-quality surface texture such as plastic materials and the like, particularly a mold steel having excellent polishability when adjusted to a pre-hardened state, and to a mold steel. The invention also relates to a method of producing a pre-hardened mold material and to a pre-hardened mold material.

### Background Art

In many cases, when molding plastic products or the like, the surface profile of a mold is directly transferred to the surface of a molded product, thereby determining the surface texture of the final product. Therefore, with regard to a mold for molding products requiring surface smoothness or surface fineness, a mirror finishing treatment of its engraved surface is demanded. For example, in the mainstream, a mold for molding plastic products is finished to have an engraved surface by preparing a pre-hardened steel adjusted in advance so as to be provided with a predetermined hardness and by machine processing (e.g., cutting, polishing) the surface thereof. Accordingly, the mold steel used for such a mold is required to have excellent polishability, and particularly required to have excellent polishability in a pre-hardened state.

In the invention, "polishability" means a property regarding the workability of a mold steel, in which the generation of pin holes due to the detachment of oxides and nitrides during a polishing process can be suppressed and the surface can be finished to be an extremely smoothened mirror surface.

In a mold steel including from 0.005% to 0.1% by mass of C, 1.5% by mass or less of Si, 2.0% by mass or less of Mn, from 3.0% or more but less than 8.0% by mass of Cr, 4.0% by mass or less of Ni, from 0.1% to 2.0% by mass of Al, 3.5% by mass or less of Cu, and from 0.1% to 1% by mass of Mo (Japanese Patent No. 3351766), and a mold steel in which more than 0.001% but less than or equal to 0.02% by mass of Mg is added to the above mold steel (Japanese Patent Application Laid-Open (JP-A) No. 2004-091840), both of which were suggested by the present applicant, the martensite structure after quenching and tempering is optimally adjusted due to the specific component composition, and excellent polishability is produced even in a pre-hardened state with a high hardness exceeding 38 HRC. When the amount of O (oxygen) and the amount of N (nitrogen) as inevitable impurities present in the steel are limited to 0.003% by mass or less and 0.02% by mass or less, respectively, oxides and nitrides in the structure are reduced and the excellent polishability is further improved.

### SUMMARY OF INVENTION

### Technical Problem

The component composition of the mold steel described in Japanese Patent No. 3351766 or JP-A No. 2004-091840 (hereinafter, these documents may be referred to as the "two documents") is useful to achieve excellent polishability even in a pre-hardened state with high hardness. It is important for the mold steel having such component composition to reduce O and N as described above. When the O or N content is high, inclusions of Al (A1 inclusions), for example, Al₂O₃ or AIN, are increased in the structure. The detachment of the Al inclusions during a finishing process results in the generation of pin holes, thereby deteriorating polishability. Therefore, in the above two documents, a method of melting and adjusting components using a vacuum melting furnace is described as an example of a method of producing a mold steel in which O and N can be reduced.

The vacuum melting is excellent vacuum-refining ability to remove O (oxygen) (i.e., deoxidation) and to remove N (nitrogen) (i.e., denitrification), dissolved in a molten steel and therefore is suitable for producing a steel having low amounts of O and N.

It is theoretically possible to adjust the amount of O and the amount of N in the mold steel described in the above two documents by vacuum melting, regardless of the processing amount.

However, in a case in which the amount of the molten steel to be processed is increased, for example, to several dozen tons in the actual operation, it takes a longer vacuum processing time to reduce O and N by the refining action during vacuum melting, which results in an increase in production costs.

Furthermore, it is preferable to establish a production method of further reducing the amount of O and the amount of N contained in the mold steel compared to the conventional method, from the viewpoint of further improving the polishability of a mold steel.

Accordingly, an object of the invention is to provide a method of producing a mold steel that enables the rapid and efficient production of a mold steel in which amounts of O and N are extremely reduced, inclusions in the structure are reduced, and excellent polishability is exhibited.

Further, another object of the invention is to provide a mold steel in which amounts of O and N are extremely reduced, inclusions in the structure are reduced, and excellent polishability is exhibited.

Further, another object of the invention is to provide a method of producing a pre-hardened mold material that enables the rapid and efficient production of a pre-hardened mold material in which amounts of O and N are extremely reduced, inclusions in the structure are reduced, and excellent polishability is exhibited.

In addition, another object of the invention is to provide a pre-hardened mold material in which amounts of O and N are extremely reduced, inclusions in the structure are reduced, and excellent polishability is exhibited.

### Solution to Problem

The inventors have examined the improvement of the method for producing the mold steel having the component composition as described in the above two documents, particularly the improvement of a melting process involved in deoxidation and denitrification.

As a result, the inventors have found that, by performing a slag refining process that can efficiently remove oxides and nitrides in a molten steel as a subsequent process in combination with the process of the conventional vacuum refining process, O and N in the molten steel after refining can be stably reduced (even in the actual operation in which a ton-level of molten steel is processed in one melting process) and a mold steel in which the formation of inclusions is further suppressed can be obtained after casting, and achieved the invention.

The specific means for solving the above problems are as follows.
<1> A method of producing a mold steel, the method including:
   a first process of preparing a molten steel A that is obtained after vacuum refining and has a component composition including from 0.005% to 0.1% by mass of C, from 1.0% to 5.0% by mass of Ni, from 3.0% to 8.0% by mass of Cr, more than 0% but less than or equal to 2.0% by mass of Mo, more than 0% but less than or equal to 3.5% by mass of Cu, and more than 0% but less than or equal to 2.0% by mass of Al, in which an amount of O is 0.005% by mass or less and an amount of N is 0.03% by mass or less;
   a second process of reducing the amount of O and the amount of N in the molten steel A, by slag refining the molten steel A, to obtain a molten steel B; and
   a third process of casting the molten steel B.
<2> The method of producing a mold steel according to <1>, in which the molten steel B includes more than 0% but less than or equal to 0.05% by mass of S.
<3> The method of producing a mold steel according to <1> or <2>, in which, in the molten steel B, the amount of O is 0.001 % by mass or less and the amount of N is 0.01 % by mass or less.
<4> The method of producing a mold steel according to any one of <1> to <3>, in which the molten steel B includes more than 0% but less than or equal to 0.05% by mass of S, and the molten steel A includes more than 0% but less than or equal to 2.0% by mass of Mn.
<5> The method of producing a mold steel according to any one of <1> to <4>, in which, in the second process, the molten steel B is obtained by adding S to the molten steel A after the slag refining.
<6> The method of producing a mold steel according to any one of <1> to <5>, in which, in the first process, the molten steel A is prepared by adding Al to a molten steel in which an amount of O and an amount of N have been reduced to 0.005% by mass or less and 0.03% by mass or less, respectively, by vacuum refining such that an amount ofAl in the molten steel A is more than 0% but less than or equal to 2.0% by mass.
<7> The method of producing a mold steel according to any one of <1> to <6>, in which an amount of O in the molten steel A is more than 0.0010% but less than or equal to 0.005% by mass, and an amount of O in the molten steel B is 0.0010% by mass or less.
<8> The method of producing a mold steel according to any one of <1> to <7>, in which, in the second process, Mg is added to the molten steel A such that an amount of Mg in the molten steel B is more than 0% but less than or equal to 0.02% by mass.
<9> The method of producing a mold steel according to <8>, in which the addition of Mg is performed by at least one of slag refining of the molten steel A with a slag including MgO or adding an Mg alloy to the molten steel A.
<10> A method of producing a pre-hardened mold material, the method including:
   producing a mold steel by the method according to any one of <1> to <9>;
   hot-working the mold steel that has been produced, to obtain a material;
   annealing the material after the hot-working; and
   quenching and tempering the material after the annealing.
<11> A method of producing a pre-hardened mold material, the method including:
   producing a mold steel by the method according to any one of <1> to <9>;
   hot-working the mold steel that has been produced, to obtain a material;
   directly quenching the material during cooling after the hot-working; and
   tempering the material after the direct quenching.
<12> A mold steel produced by the method of producing a mold steel according to any one of <1> to <7>,
   the mold steel including from 0.005% to 0.1% by mass of C, more than 0% but less than or equal to 3.0% by mass of Si, more than 0% but less than or equal to 2.0% by mass of Mn, 0.05% by mass or less of S (including no addition of S), from 1.0% to 5.0% by mass of Ni, from 3.0% to 8.0% by mass of Cr, more than 0% but less than or equal to 2.0% by mass of Mo, more than 0% but less than or equal to 3.5% by mass of Cu, from 0.1% to 1.5% by mass ofAl, and 1.0% by mass or less of Co (including no addition of Co),
   in which an amount of O and an amount of N are limited to 0.001% by mass or less and 0.01% by mass or less, respectively, and
   a balance of the mold steel including Fe and inevitable impurities.
<13> A mold steel produced by the method of producing a mold steel according to <8> or <9>,
   the mold steel including from 0.005% to 0.1% by mass of C, more than 0% but less than or equal to 3.0% by mass of Si, more than 0% but less than or equal to 2.0% by mass of Mn, 0.05% by mass or less of S (including no addition of S), from 1.0% to 5.0% by mass of Ni, from 3.0% to 8.0% by mass of Cr, more than 0% but less than or equal to 2.0% by mass of Mo, more than 0% but less than or equal to 3.5% by mass of Cu, from 0.1% to 1.5% by mass ofAl, 1.0% by mass or less of Co (including no addition of Co), and more than 0% but less than or equal to 0.02% by mass of Mg,
   in which an amount of O and an amount of N are limited to 0.001% by mass or less and 0.01% by mass or less, respectively, and
   a balance of the mold steel including Fe and inevitable impurities.
<14> A pre-hardened mold material produced by the method of producing a pre-hardened mold material according to <10> or <11>,
   the pre-hardened mold material including from 0.005% to 0.1% by mass of C, more than 0% but less than or equal to 3.0% by mass of Si, more than 0% but less than or equal to 2.0% by mass of Mn, 0.05% by mass or less of S (including no addition of S), from 1.0% to 5.0% by mass of Ni, from 3.0% to 8.0% by mass of Cr, more than 0% but less than or equal to 2.0% by mass of Mo, more than 0% but less than or equal to 3.5% by mass of Cu, from 0.1% to 1.5% by mass ofAl, 1.0% by mass or less of Co (including no addition of Co), and 0.02% by mass or less of Mg (including no addition of Mg),
   in which an amount of O and an amount of N are limited to 0.001% by mass or less and 0.01% by mass or less, respectively, and
   a balance of the pre-hardened mold material including Fe and inevitable impurities. Advantageous Effects of Invention

According to the invention, a method of producing a mold steel that enables the rapid and efficient production of a mold steel in which amounts of O and N are extremely reduced, inclusions in the structure are reduced, and excellent polishability is exhibited, can be provided.

In addition, according to the invention, a mold steel in which amounts of O and N are extremely reduced, inclusions in the structure are reduced, and excellent polishability is exhibited, can be provided.

According to the invention, a method of producing a pre-hardened mold material that enables the rapid and efficient production of a pre-hardened mold material in which amounts of O and N are extremely reduced, inclusions in the structure are reduced, and excellent polishability is exhibited, can be provided.

In addition, according to the invention, a pre-hardened mold material in which amounts of O and N are extremely reduced, inclusions in the structure are reduced, and excellent polishability is exhibited, can be produced.

### BRIEF DESCRIPTION OF DRAWINGS

Fig. 1 is an optical micrograph showing the structure of the steel ingot (example of the invention) produced by casting the molten steel B (after slag refining) of sample No. 1 in the Examples section.
Fig. 2 is an optical micrograph showing the structure of the steel ingot (example of the invention) produced by casting the molten steel B (after slag refining) of sample No. 4 in the Examples section.
Fig. 3 is an optical micrograph showing the structure of the steel ingot (example of the invention) produced by vacuum arc re-melting the steel ingot obtained after the temporal casting of the molten steel B (after slag refining) of sample No. 7 in the Examples section.

### DESCRIPTION OF EMBODIMENTS

In this specification, the term "% by mass", which indicates the amount (content rate) of each component, is sometimes simply indicated by "%".

In this specification, a numerical range expressed with "- (to)" represents a range including the numerical values described in front of and after "- (to)", as the minimum value and the maximum value, respectively.

The hardness indicated by the unit "HRC" in this specification refers to the Rockwell hardness defined by JIS G 0202.

Hereinbelow, the details of the method of producing a mold steel, the method of producing a pre-hardened mold material, a mold steel, and a pre-hardened mold material according to the invention are described.

### Method of Producing Mold Steel, Method of Producing Pre-Hardened Mold Material

The method of producing a mold steel (hereinafter, sometimes simply referred to as "steel") according to the invention includes:
a first process of preparing a molten steel A that is obtained after vacuum refining and has a component composition including from 0.005% to 0.1% of carbon (hereinafter, sometimes referred to as "C"), from 1.0% to 5.0% by mass of nickel (hereinafter, sometimes referred to as "Ni"), from 3.0% to 8.0% by mass of chrome (hereinafter, sometimes referred to as "Cr"), more than 0% but less than or equal to 2.0% by mass of molybdenum (hereinafter, sometimes referred to as "Mo"), more than 0% but less than or equal to 3.5% by mass of copper (hereinafter, sometimes referred to as "Cu"), and more than 0% but less than or equal to 2.0% by mass of aluminum (hereinafter, sometimes referred to as "Al"), in which an amount of oxygen (hereinafter, sometimes referred to as "O") is 0.005% by mass or less and an amount of nitrogen (hereinafter, sometimes referred to as "N") is 0.03% by mass or less;
a second process of reducing the amount of O and the amount of N in the molten steel A by slag refining the molten steel A, to obtain a molten steel B; and
a third process of casting the molten steel B.

The method of producing a mold steel according to the invention may further includes other processes if necessary.

According to the method of producing a mold steel of the invention, since the molten steel A which originally contains a small amount of O and a small amount of N further subjected to slag refining, the amount of O and the amount of N in the molten steel can be efficiently reduced to extremely low levels (that is, efficiency in deoxidation and denitrification of the molten steel is excellent). This enables the production of the mold steel in which inclusions (for example, oxides or nitrides, the same applies hereafter) in the structure are reduced.

The mold steel obtained has reduced inclusions in the structure and thus has an excellent polishability. In addition, the mold steel has an excellent machinability.

Therefore, according to the invention, the mold steel having a component composition (for example, the component composition represented by the above two documents) that originally provides excellent polishability and machinability can be produced rapidly and efficiently even on an actual operation scale that processes a large amount of molten steel.

Furthermore, according to the above production method, since the amount of O and the amount of N can be further reduced in the component composition described in the above two documents (for example, the amount of O can be limited to 0.001% by mass or less and the amount of N can be limited to 0.01% by mass or less), polishability and machinability can be further improved.

Accordingly, the method of producing a mold steel according to the invention is preferable as a method of producing a steel used for a mold for molding products that has high-quality surface texture, and thus is a useful technique for the mold industry.

Hereinbelow, the first to third processes are described.

### First process

The first process is a process of preparing a molten steel A that is obtained after vacuum refining and has a component composition including from 0.005% to 0.1% of C, from 1.0% to 5.0% by mass of Ni, from 3.0% to 8.0% by mass of Cr, more than 0% but less than or equal to 2.0% by mass of Mo, more than 0% but less than or equal to 3.5% by mass of Cu, and more than 0% but less than or equal to 2.0% by mass of A1, in which the amount of O is 0.005% by mass or less and the amount of N is 0.03% by mass or less. The preferable ranges of the amounts of respective components in the molten steel A are described below.

In the first process, the molten steel A prepared in advance may be used, or the molten steel A may be prepared for each production of the mold steel.

In the production of the molten steel A, the production may be carried out, for example, by the vacuum refining method described in Japanese Patent No. 3351766 or JP-A No. 2004-091840.

In general, the component composition of the mold steel is adjusted by blending a raw material into an iron source before melting, or introducing a raw material into a molten steel that has been melted. In a case in which such an iron source or raw material contains more than a small amount of impurities, it becomes one of the factors for increasing O or N in the steel.

Therefore, in the production method according to the invention, prior to the second process (slag refining) having an essential role for deoxidation and denitrification described later, the molten steel A in which at least the amounts of the major elements for forming the mold steel are adjusted and O and N are preliminary reduced by slag refining is prepared in advance (first process).

More specifically, in the molten steel A prepared in the first process, the amount of O is 0.005% or less and the amount of N is 0.03% or less.

The amount of O is preferably 0.003% or less, and the amount of N is preferably 0.02% or less.

In the molten steel A prepared in the first process, Al not only acts as a constituting element of the final mold steel, but also functions as an deoxidation agent or a denitrification agent in the second process, and then is to be consumed. Therefore, the allowable amount of Al in the molten steel A prepared in the first process may be a larger amount than that required for the mold steel.

Accordingly, the amount of Al in the molten steel A prepared in the first process is set to 2.0% or less.

There is no need to define a specific lower limit of the amount of Al in this process, as long as the sufficient amount of Al for deoxidation and denitrification in the second process is contained.

The amount of Al in the molten steel A is preferably 0.1% or more.

The preferable aspect of the first process is an aspect in which the molten steel A is prepare by adding Al to a molten steel in which the amount of O is reduced to 0.005% by mass or less and the amount of N is reduced to 0.03% by mass or less, by vacuum refining such that the amount of Al in the molten steel A is more than 0% by mass and 2.0% by mass or less.

In this aspect, the addition of Al to the molten steel can be accomplished with little influence on the degasing effect (details are described below) and the refining efficiency of vacuum refining.

Furthermore, in this aspect, Al inclusions can be formed from O or N, which is slightly remaining in the molten steel A, with Al added. The Al inclusions can be removed by slag refining in the second process. Therefore, the amount of O and the amount of N can be reduced more effectively by the production method according to the invention as a whole.

In association with the above, Al in the first process may be added after finishing vacuum refining, and is preferably added at the end of vacuum refining at which degassing is practically finished (for example, after the step in which the amount of O and the amount of N in the molten steel are reduced to 0.005% by mass or less and 0.03% by mass or less, respectively, by vacuum refining).

The deoxidation and denitrification by vacuum refining proceed mainly through a reaction with C or O in the molten steel or boiling associated with this reaction (hereinafter, these actions are sometimes referred to as "degassing effect" or "degassing").

Therefore, when a large amount ofAl is added before vacuum refining, there is a case in which inclusions are formed from O and N before their degassing with Al first, which may results in deterioration of the refining efficiency.

Accordingly, when Al is added at the termination of vacuum refining, the original degassing effect is not affected. In addition, a part of the Al added at the termination of vacuum refining is combined with a small amount of O or N which is still remaining in the molten steel and forms Al inclusions in the molten steel prior to slag refining of the second process.

In the slag refining of the second process described below, deoxidation and denitrification of the molten steel are achieved by incorporating inclusions in the molten steel into a slag.

Therefore, the addition of Al from the top surface of the slag, which results in poor addition efficiency, can be avoided by adding A1 in advance to the molten steel before slag refining. In addition, the efficiency of slag refining is be improved by forming Al inclusions in advance. By undergoing a process of transferring the molten steel to another container when proceed to slag refining, the Al added can be spread throughout the molten steel and the Al inclusions formed float by the vigorous stirring action at the time of tapping of the molten steel. As a result, the refining efficiency of the second process is further improved. By introducing the slag for the second process into at least one of the molten steel at the termination of vacuum refining in the first process or the molten steel at the time of tapping as described above, the slag can be heated (and further melted) and stirred in advance. As a result, the refining efficiency at the second process is further improved.

In a case in which the first process is a process in which the molten steel A is produced by vacuum refining, the duration of vacuum refining is preferably 60 minutes or more, and more preferably 90 minutes or more.

The upper limit of the duration of vacuum refining is not particularly limited, but in terms of productivity, the duration of vacuum refining is preferably 180 minutes or less, and more preferably 150 minutes or less.

In the production method according to the invention, the duration of vacuum refining can be shortened (preferably180 minutes or less, and more preferably 150 minutes or less) by providing the second process described below.

The molten steel A prepared in the first process has the component composition as described above, and may have a component composition further containing more than 0% but less than or equal to 3.0% of silicon (hereinafter, sometimes referred to as "Si").

The molten steel A may have a component composition further containing more than 0% but less than or equal to 2.0% of manganese (hereinafter, sometimes referred to as "Mn").

The molten steel A may have a component composition further containing more than 0% but less than or equal to 1.0% of cobalt (hereinafter, sometimes referred to as "Co").

The molten steel A may have a component composition further containing more than 0% but less than or equal to 0.05% of sulfur (hereinafter, sometimes referred to as "S").

The molten steel A may have a composition having the same component composition as the mold steel described below except for the amount of O and the amount of N.

### Second process

The second process is a process of obtaining a molten steel B by reducing the amount of O and the amount of N in the molten steel A, by slag refining the molten steel A.

The amount of O in the molten steel B obtained is preferably 0.001% or less.

The amount of N in the molten steel B obtained is preferably 0.01 % or less.

The slag refining in the invention refers to an embodiment of refining in which a molten steel is contacted with a slag. The slag used can be appropriately selected from the conventionally known slags for steelmaking.

Since deoxidation and denitrification proceed by the degassing effect described above, vacuum refining is inefficient in removing O and N that are combined with Al or the like and present in the form of inclusions.

Therefore, in a case in which the molten steel being subjected to a brief treatment of vacuum refining is directly casted into a steel, it is difficult to reduce the amounts of O and N to an extremely low level since a part of the Al contained in the molten steel forms Al inclusions. As a result, when the treating time of vacuum refining is short, there is a possibility that more than a small amount of O and N remaining in the molten steel after vacuum refining is combined with A1 added at this timing, thereby forming a large amount of Al inclusions in the steel after casting.

However, the amount of A1 in the mold steel according to the invention is adjusted under the assumption that Al forms an intermetallic compound with Ni to exert the effect of improvement in hardness and the effect of improvement in softening resistance of Al as described below.

Therefore, it is conceivable that, in the conventional steel in which the component composition is adjusted only by vacuum refining, a part of Al actually forms Al inclusions after casting (that is, the amounts of O and N are high with respect to the amount of Al) and thus intrinsic hardness and softening resistance are not sufficiently exerted even when the amount of Al in the molten steel after vacuum refining is an intended amount. Furthermore, it is conceivable that the intrinsic excellent polishability is not exerted due to the presence of Al inclusions.

In order that Al in the mold steel after casting forms an intermetallic compound instead of forming inclusions, not only O and N in a state of gas component are reduced, but also O and N forming inclusions of Al (that is, Al inclusions themselves) should be actively reduced in the melting process.

In the invention, the molten steel A in which O and N in a state of gas component are reduced by vacuum refining is further subjected to slag refining of the second process. As a result, Al inclusions in the molten steel is effectively incorporated into the slag, thereby removing the Al inclusions. Therefore, the amount of O and the amount of N in the molten steel A can be further reduced.

Furthermore, with regard to the O and N in a state of gas component and still remaining in the molten steel, a part of Al included before slag refining functions as a deoxidation agent or a denitrification agent and converts the gas component into Al inclusions during slag refining. As a result, the Al inclusions formed can be efficiently removed.

In the methods described in the above two documents based on vacuum refining, the amount of O in the steel which is limited up to 0.003% was permitted. However, in the invention using a combination of the above-described first and second processes, the deoxidation ability is stably improved and the amount of O can be controlled at a low limitation amount, such as 0.001% or less.

According to the invention, the amount of N in the steel can also be controlled at a low limited amount, such as 0.01% or less.

In the invention, in a case in which the amount of Al in the molten steel B obtained in the second process is lower than the targeted amount for the steel, the deficiency may be supplied at this time.

The duration of slag refining in the second process is preferably 20 minutes or more, more preferably 40 minutes or more, and still more preferably 50 minutes or more, from the view point of obtaining the effect caused by slag refining (the effect of reducing the mounts of O and N) more efficiently.

The upper limit of the duration of slag refining is not particularly limited, but in terms of productivity, the duration of slag refining is preferably 180 minutes or less, more preferably 120 minutes or less, and still more preferably 90 minutes or less.

The molten steel B obtained in the second process preferably contains more than 0% but less than or equal to 0.05% by mass of S.

As a result, a sulfide in which S is combined with other elements in the molten steel B can be formed, and therefore, the machinability of the steel produced can be further improved.

In this case, the S amount in the molten steel B is preferably 0.003% or more, and more preferably 0.004% or more.

From the viewpoints of suppressing the coarsening of the sulfide and improving the corrosion resistance, the S amount in the molten steel B is preferably 0.05% or less, and more preferably 0.01% or less.

In a case in which the molten steel B contains more than 0% but less than or equal to 0.05% by mass of S, more preferable aspect is that the molten steel A prepared in the first process contains more than 0% but less than or equal to 2.0% by mass of Mn.

In this aspect, the molten steel B may also contain more than 0% but less than or equal to 2.0% by mass of Mn, which enables the formation of a sulfide in which S is combined with Mn after the second process, and thus, the machinability of the steel produced can be further improved.

In a case in which the molten steel B contains more than 0% but less than or equal to 0.05% by mass of S, S may be included in the molten steel A (before slag refining) in advance, or may be added to the molten steel A during or after slag refining (preferably after slag refining).

In the second process, the molten steel B is preferably obtained by adding S to the molten steel A after slag refining.

This enables the addition of S to the molten steel with little influence on the effect obtained by slag refining (the effect of reducing the amounts of O and N).

In this aspect, S is more preferably added to the molten steel A after slag refining such that the amount of S in the molten steel B is more than 0% but less than or equal to 0.05% by mass.

For example, the amount of O in the second process may be reduced such that the amount of O in the molten steel A is more than 0.0010% by mass but less than or equal to 0.005% by mass and the amount of O in the molten steel B is 0.0010% by mass or less.

In the second process, Mg may be added to the molten steel A (more preferably Mg may be added to the molten steel A such that the Mg amount in the molten steel B is more than 0% but less than or equal to 0.02% by mass).

By the addition of Mg, Al inclusions containing Al₂O₃ are removed in the second process, and at the same time, a minute amount of remaining AlO₃ in the form of inclusion can be converted into an MgO-based fine oxide. As a result, the polishability of the steel can be further improved.

Furthermore, by the addition of Mg, MgS-based fine inclusions are formed, whereby the machinability of the steel can be further improved.

However, Mg is an evaporable element, and thus, there is a case in which the vaporization may proceed rapidly when Mg is introduced into the molten steel in the metallic state.

Therefore, when Mg is added to the molten steel A in the second process, it is preferable to perform at least one of slag refining the molten steel A using a slag including MgO and adding an Mg alloy to the molten steel A.
In a case in which slag refining is carried out using a slag containing MgO, MgO is reduced during slag refining and Mg generated by the reduction is thus added to the molten steel A.

The component composition of the molten steel B obtained in the second process may be the same as that of the molten steel A except for the amount of O and the amount of N.

In the component composition of the molten steel B, more than 0% but less than or equal to 3.0% of Si may be contained.

In the component composition of the molten steel B, more than 0% but less than or equal to 2.0% of Mn may be contained.

In the component composition of the molten steel B, more than 0% but less than or equal to 1.0% of Co may be contained.

The component composition of the molten steel B may be the same as that of the mold steel described below.

### Third process

The third process is a process of casting the molten steel B (the molten steel of which component composition has been adjusted) obtained in the second process. Through the third process, a steel ingot (mold steel) is obtained.

Any casting method may be used, such as an ordinary ingot making method using an ingot case, a continuous casting method, or a vacuum arc re-melting method or an electro-slag re-melting method performed using a steel ingot after temporal casting.

The steel ingot obtained in the third process may be used as the mold steel as it is.

The steel ingot obtained in the third process may be further subjected to other processes described below as needed and then used as the mold steel.

The method of manufacturing the mold steel according to the invention may include other processes as needed.

Examples of other processes include a process in which the steel ingot obtained in the third process is subjected to hot-working such as hot forging or hot rolling. Through such process, the mold steel finished to have a desired shape can be obtained.

In order to obtain the mold steel in a pre-hardened state (pre-hardened mold material), for example, the material that has been subjected to annealing after hot-working is subjected to quenching or the material during cooling after hot-working is subjected to direct quenching, and then the resultant is subjected to the predetermined tempering. As a result, the pre-hardened mold material with a hardness of, for example, 35 HRC or more or 38HRC or more can be obtained.

The distribution condition of inclusions in the structure of the metal ingot (mold steel) after casting is reflected in the structure of the mold steel in a pre-hardened state (pre-hardened mold material) obtained through the above processes.

Therefore, it is possible to obtain the pre-hardened mold material having excellent polishability by producing a steel ingot, as the mold steel, in which the amount of O and the amount of N are low and a small amount of fine inclusions in the structure is included, and then processing and heat treating the steel ingot under appropriate conditions.

That is, the first aspect of the method of producing a pre-hardened mold material in the invention is a method including: producing a mold steel by the method of manufacturing the mold steel according to the invention; hot-working the produced mold steel to obtain a material; annealing the material after the hot-working; and quenching and tempering the material after the annealing.

The second aspect of the method of producing a pre-hardened mold material in the invention is a method including: producing a mold steel by the method of manufacturing the mold steel according to the invention; hot-working the produced mold steel to obtain a material; directly quenching the material during cooling after the hot-working; and tempering the material after the direct quenching.

According to the first and second aspects of the method of producing a pre-hardened mold material, the effect similar to that obtained by the method of producing a mold steel according to the invention as described above can be obtained.

More specifically, according to the first and second aspects of the method of producing a pre-hardened mold material, the pre-hardened mold material having an excellent polishability even in the pre-hardened state can be rapidly and efficiently produced.

### Mold Steel, Pre-hardened Mold Material

The mold steel according to the invention includes from 0.005% to 0.1% by mass of C, more than 0% but less than or equal to 3.0% by mass of Si, more than 0% but less than or equal to 2.0% by mass of Mn, 0.05% by mass or less of S (including no addition of S), from 1.0% by mass to 5.0% by mass of Ni, from 3.0% by mass to 8.0% by mass of Cr, more than 0% but less than or equal to 2.0% by mass of Mo, more than 0% but less than or equal to 3.5% by mass of Cu, from 0.1% to 1.5% by mass ofAl, and 1.0% by mass or less of Co (including no addition of Co), (and preferably more than 0% but less than or equal to 0.02% by mass of Mg), in which the amount of O is limited to 0.001% by mass or less and the amount of N is limited to 0.01% by mass or less, and a balance of the mold steel including Fe and inevitable impurities.

According to the mold steel of the invention, since the amount of O and the amount of N are extremely low, inclusions in the structure are reduced. As a result, polishability and machinability is be further improved compared to the conventional mold steel (such as the mold steel described in the above two documents).

The mold steel according to the invention is preferably produced by the above-described method of producing the mold steel according to the invention.

The details of the component composition of the mold steel according to the invention are described hereinafter.

The pre-hardened mold material according to the invention includes from 0.005 to 0.1% by mass of C, more than 0% but less than or equal to 3.0% by mass of Si, more than 0% but less than or equal to 2.0% by mass of Mn, 0.05% by mass or less of S (including no addition of S), from 1.0% to 5.0% by mass ofNi, from 3.0% to 8.0% by mass of Cr, more than 0% but less than or equal to 2.0% by mass of Mo, more than 0% but less than or equal to 3.5% by mass of Cu, from 0.1% to 1.5% by mass ofAl, 1.0% by mass or less of Co (including no addition of Co), 0.02% by mass or less of Mg (including no addition of Mg), in which the amount of O is limited to 0.001 % by mass or less and the amount of N is limited to 0.01 % by mass or less, and a balance of the pre-hardened mold material including Fe and inevitable impurities.

According to the pre-hardened mold material of the invention, the effect similar to that obtained by the mold steel according to the invention is obtained. More specifically, the pre-hardened mold material according to the invention has an excellent polishability even in the pre-hardened state.

The pre-hardened mold material according to the invention is preferably produced by the above-described method of producing the pre-hardened mold material according to the invention.

The details of the component composition of the pre-hardened mold material according to the invention are described hereinafter.

### Component Composition of Mold Steel and Pre-Hardened Mold Material

Hereinbelow, the component composition (% by mass) of the mold steel and the pre-hardened mold material suitable for achieving an excellent polishability is described.

The mold steel and the pre-hardened mold material are sometimes collectively referred to as "material".

The method of manufacturing the mold steel according to the invention and the method of manufacturing the pre-hardened mold material according to the invention are sometimes collectively referred to as "the method of the invention".

### C: from 0.005% to 0.1%

C is an element effective in preventing the formation of ferrite and improving hardness and strength.

However, an excessive amount of C results in the formation of carbides, thereby increasing tool wear when cutting. Furthermore, in this case, an amount of Cr in the matrix is reduced, and thus, corrosion resistance is deteriorated.

Therefore, the amount of C in the material is preferably from 0.005% to 0.1%.

The amount of C is more preferably 0.01% or more.

Meanwhile, the amount of C is more preferably 0.08% or less.

### Si: more than 0% but less than or equal to 3.0%

Si is generally used as a deoxidizer in the melting process.

When Si is contained, the matrix hardness of the material is increased and machinability is improved, while toughness is reduced.

Therefore, taking the balance between these functions into consideration, the amount of Si in the material is preferably 3.0% or less. The amount of Si is more preferably 2.0% or less, and still more preferably 1.5% or less.

Meanwhile, the amount of Si is more preferably 0.05% or more, and still more preferably 1.0% or more.

### Mn: more than 0% but less than or equal to 2.0%

Mn is used as a deoxidizer similar to Si, and has a function of preventing the formation of ferrite by enhancing hardenability.

Furthermore, when the material contains sufficient amount of S, Mn is an element which forms an MnS-based sulfied and can improve machinability.

However, when there is an excess amount of Mn in the material, ductility of the structure is increased, thereby reducing machinability.

Therefore, the amount of Mn in the material is preferably 2.0% or less. The amount of Mn is more preferably 1.0% or less.

Meanwhile, the amount of Mn is more preferably 0.1% or more.

### S: 0.05% or less

S is combined with Mn or Mg described below to form a sulfide, thereby improving machinability.

However, an excess amount of S accelerates coarsening of the sulfide and deteriorates corrosion resistance since the coarsened sulfide tends to act as the origin of pitting corrosion.

Therefore, even in a case in which S is added, the amount of S in the material is preferably 0.05% or less. The amount of S is more preferably 0.01% or less.

Meanwhile, in a case in which S is added, the amount of S in the material is preferably 0.003% or more, and more preferably 0.004% or more.

### Ni: from 1.0% to 5.0%

Ni has functions of lowering the transformation temperature and uniformly promotes the martensitic transformation at quench-cooling. Furthermore, Ni has functions of forming and precipitating intermetallic compounds with Al described below, thereby increasing hardness and softening resistance.

However, an excess amount of Ni results in the formation of austenite, thereby deteriorating machinability.

Therefore, the amount of Ni in the material is preferably from 1.0% to 5.0%.

The amount of Ni is more preferably 2.0% or more.

Meanwhile, the amount of Ni is more preferably 3.8% or less.

### Cr: from 3.0% to 8.0%

Cr is effective in imparting corrosion resistance, but whose content is required to be limited in order to obtain a structure having excellent machinability.

When the amount of Cr is less than about 3% and more than about 8%, machinability is reduced since Cr accelerates the precipitation of a pro-eutectoid ferrite prior to the martensitic transformation at quench-cooling. The precipitation of the pro-eutectoid ferrite also causes the transformation strain when the remaining austenite transforms to martensite, thereby further reducing machinability.

Therefore, the amount of Cr in the material is preferably from 3.0% to 8.0%.

The amount of Cr is more preferably 3.5% or more.

Meanwhile, the amount of Cr is more preferably 7.0% or less, and still more preferably 5.0% or less.

### Mo: more than 0% but less than or equal to 2.0%

Mo is dissolved in the matrix to strengthen a passive film and is extremely effective element in improving corrosion resistance. Moreover, Mo is significantly effective in suppressing coarsening of M₇C₃ type carbides mainly formed from Cr since Mo is combined with C to form fine complex carbides, and acts to improve toughness and reduce the formation of pinholes.

However, an excessive amount of Mo results in the formation of a large amount of carbides, thereby increasing tool wear when cutting or finish working.

Therefore, the amount of Mo in the material is preferably 2.0% or less. The amount of Mo is more preferably 1.5% or less.

Meanwhile, the amount of Mo is more preferably 0.1% or more, and still more preferably 0.5% or more.

### Cu: more than 0% but less than or equal to 3.5%

Cu is considered to form a solid solution (ε phase) in which a small amount of Fe is dissolved, and contributes to precipitation hardening, similar to the above-described Ni.

However, an excess amount of Cu results in decreasing toughness and hot workability.

Therefore, the amount of Cu in the material is preferably 3.5% or less. The amount of Cu is more preferably 1.5% or less, and still more preferably 1.0% or less.

Meanwhile, the amount of Cu is more preferably 0.3% or more.

### A1: 0.1% to 1.5%

Al has a function of forming and precipitating an intermetallic compound with Ni as described above, thereby increasing hardness and softening resistance.

However, an excess amount ofAl results in the formation of coarse and hard oxide-based inclusions, which cause a tool wear when cutting or finish working and also causes the deterioration of mirror polishability and crepability.

Therefore, the amount of Au in the material is preferably from 0.1 % to 1.5%. The amount of Au is more preferably 0.5% or more.

Meanwhile, the amount of Au is more preferably 1.2% or less.

### Co: 1.0% or less (including no addition of Co)

1.0% or less of Co may be added to the material according to the invention.

In the actual operation in which a tonne-level of molten steel is processed, the mold steel can possibly contain approximately 0.5% or less of Co even when no Co is added. Co is dissolved in the matrix to improve secondary hardening property and corrosion resistance. Furthermore, Co suppress the coarsening of M₇C₃ type carbides mainly formed from Cr, and promotes finely precipitation of these carbides and NiAl intermetallic compounds in the matrix, thereby improving toughness.

### O: 0.01% or less

O is an element that inevitably present in the material and forms oxides. The oxides reduce cold plastic workability for producing the material and polishability for finishing the mold surface.

Therefore, the upper limit of the amount of O in the material is preferably limited to 0.001%, and more preferably 0.0005% or less. The reduction of the amount of O in the material to extremely low level can be stably and effectively achieved by the above-described production method.

### N: 0.01% or less

N is an element that inevitably present in the material and forms nitrides. In particular, in a case of the material according to the invention that contains Al, AlN nitrides formed significantly deteriorate toughness, machinability, and polishability of the steel. Therefore, the amount of N in the material is preferably limited to 0.01% or less, more preferably 0.005% or less, and still more preferably 0.002% or less.

The solid solubility of N in the steel depends greatly on the amount of Cr. That is, in the melting process, the solid solubility of N in the steel is increased by the increase in the amount of Cr. For example, in the molten steel at 1500°C, the solid solubility limit of N is approximately 220 ppm when the amount of Cr is about 2%, while the solid solubility limit increases to approximately 280 ppm when the amount of Cr is about 3%. When the amount of Cr is about 5%, the solid solubility limit increases up to over 300 ppm.

Therefore, for the material according to the invention that contains 3.0% or more of Cr, the melting method to reduce the amount of N within the above-described limited amount is important. The reduction of the amount of N to extremely low level can be stably and effectively achieved by the above-described production method.

### Mg: 0.02% or less

In order to achieve the practical use of the mold for molding large-size products having excellent surface quality, the engraved surface of the mold is required to have a high-quality mirror finished surface of, for example, #3000 or more. Therefore, the mold steel is required to have an excellent polishability.

However, in a case in which a large amount of Al₂O₃-based coarsened inclusions in a bulk form that tend to aggregate in the steel are present, pin holes that can easily confirmed visually are generated due to the detachment of inclusions during mirror polishing and the surface quality of the molded product is deteriorated.

Since Mg added to the steel has a greater affinity for O than Al, the Mg is combined with O in the steel to form an MgO-based oxide and suppresses the formation of Al₂O₃ that causes the deterioration of polishability. Since the MgO-based inclusions hardly aggregate, miniaturizing effect of the inclusion can be attempted even when it remains in the steel, compared to the case of Al₂O₃ that tends to aggregate and coarsen in the steel.

Furthermore, Mg is combined with S to form MgS-based inclusions.

Conventionally, the improvement in machinability of the steel type containing Mn was achieved by precipitating MnS in the structure.

However, since it is difficult to miniaturize MnS, the addition of a large amount of Mn and S so as to improve machinability results in the generation of pinholes caused by sulfides to deteriorate polishability. In contrast, since it is easy to miniaturize and disperse MgS-based inclusions, the formation and distribution of sulfides that acts as cutting starting-points of grinding swarf can be achieved by the addition of a small amount of Mg.

However, when Mg is added in amounts greater than that appropriate for O and S in the components of the invention, hot workability is deteriorated.

Therefore, in the invention, the amount of Mg to be added is preferably 0.02% or less. The amount of Mg is more preferably 0.005% or more. The addition of an appropriate amount of Mg to the material according to the invention that contains Al can be stably and effectively achieved by the above-described production method of the invention.

### EXAMPLES

Hereinbelow, the invention is described more specifically by reference to examples. However, the invention is not limited to the examples.

### Example of invention

### First Prowess

Respective molten steel A's of sample Nos. 1 to 7 shown in the following Table 1 were prepared.

The component compositions (% by mass) in Table 1 correspond to the component composition of each sample collected from a molten steel A.

More specifically, 25 tonne of a molten steel prepared to have a predetermined component composition was subjected to vacuum refining at a vacuum degree of 1 kPa or less for about 120 minutes, thereby preparing the molten steel A (first process).

In this process, the reduction of O and N in the molten steel (more specifically, the amount of O and the amount of N in the molten steel were reduced to 0.005% by mass or less and 0.03% by mass or less, respectively) was confirmed at the termination of the vacuum refining, and then Al and a CaO slag were added to the molten steel.

Thereafter, the molten steel (molten steel A) after finishing the vacuum refining was transferred to a slag refining ladle.

### Second process

The molten steel A transferred to the slag refining ladle was subjected to slag refining for about 60 minutes using the CaO slag. S (sulfur) was added to the molten steel obtained by the slag refining, thereby obtaining a molten steel B (the above is the second process).

In the slag refining, MgO was further added to the slag of sample No. 4.

Furthermore, in the slag refining, a Ni-Mg alloy was introduced into the molten steel of sample No. 5 or 6 through the CaO slag.

### Third process

Each of the molten steel B's of sample Nos. 1 to 6 was subjected to casting, thereby producing a mold steel (the third process).

The component composition of the molten steel B of each of sample Nos. 1 to 6 (that is, the component composition of the mold steel after casting) is shown in Table 1.

In sample No. 7, a steel ingot obtained after the temporal casting of the molten steel B was subjected to vacuum arc re-melting, thereby producing a mold steel (hereinafter, sometimes referred to as "mold steel after vacuum arc re-melting"). In Table 1, with regard to sample No. 7, the component composition of the molten steel B is described together with the component composition of the mold steel after vacuum arc re-melting.

### Conventional Example

Each of the molten steel A's of sample Nos. 1 to 7 was subjected to casting, thereby producing a mold steel (conventional example).

The conventional example corresponds to the conventional method of producing a mold steel, in which slag refining is not conducted and the components are adjusted using only a vacuum melting furnace.

**Table 1**

| No. | State | Component composition (% by mass) | | | | | | | | | | | | | |
|---|---|---|---|---|---|---|---|---|---|---|---|---|---|---|---|
| | | C | Si | Mn | S | Ni | Cr | Mo | Cu | Al | Co | O | N | Mg | Fe |
| 1 | Molten steel A | 0.06 | 1.2 | 0.8 | 0.0004 | 3.0 | 3.9 | 1.0 | 0.5 | 0.9 | 0.1 | 0.0013 | 0.0021 | 0.0005 | Bal. |
| | Molten steel B | 0.06 | 1.2 | 0.8 | 0.0076 | 3.0 | 3.9 | 1.0 | 0.5 | 0.8 | 0.1 | 0.0005 | 0.0015 | 0.0020 | Bal. |
| 2 | Molten steel A | 0.06 | 1.2 | 0.8 | 0.0008 | 3.0 | 4.0 | 1.0 | 0.5 | 0.9 | 0.1 | 0.0020 | 0.0013 | 0.0005 | Bal. |
| | Molten steel B | 0.07 | 1.2 | 0.8 | 0.0049 | 3.0 | 4.0 | 1.0 | 0.5 | 0.8 | 0.1 | 0.0004 | 0.0011 | 0.0023 | Bal. |
| 3 | Molten steel A | 0.06 | 1.2 | 0.8 | 0.0007 | 3.0 | 3.9 | 1.0 | 0.5 | 0.8 | 0.1 | 0.0014 | 0.0016 | 0.0004 | Bal. |
| | Molten steel B | 0.06 | 1.2 | 0.8 | 0.0046 | 3.0 | 3.9 | 1.0 | 0.5 | 0.8 | 0.1 | 0.0005 | 0.0015 | 0.0024 | Bal. |
| 4 | Molten steel A | 0.06 | 1.2 | 0.8 | 0.0003 | 3.1 | 4.1 | 1.0 | 0.5 | 0.9 | 0.1 | 0.0017 | 0.0019 | 0.0005 | Bal. |
| | Molten steel B | 0.07 | 1.2 | 0.8 | 0.0040 | 3.1 | 4.1 | 1.0 | 0.5 | 0.9 | 0.1 | 0.0002 | 0.0009 | 0.0056 | Bal. |
| 5 | Molten steel A | 0.07 | 1.2 | 0.6 | 0.0002 | 2.7 | 4.0 | 1.0 | 0.5 | 0.9 | 0.1 | 0.0015 | 0.0011 | 0.0004 | Bal. |
| | Molten steel B | 0.07 | 1.2 | 0.6 | 0.0047 | 3.2 | 4.1 | 1.0 | 0.5 | 0.8 | 0.1 | 0.0002 | 0.0009 | 0.0063 | Bal. |
| 6 | Molten steel A | 0.06 | 1.2 | 0.8 | 0.0003 | 2.5 | 4.0 | 1.0 | 0.4 | 0.9 | 0.1 | 0.0018 | 0.0015 | 0.0005 | Bal. |
| | Molten steel B | 0.06 | 1.2 | 0.8 | 0.0037 | 3.0 | 4.0 | 1.0 | 0.4 | 0.8 | 0.1 | 0.0002 | 0.0009 | 0.0069 | Bal. |
| 7 | Molten steel A | 0.06 | 1.2 | 0.8 | 0.0029 | 3.0 | 4.0 | 1.0 | 0.5 | 0.9 | 0.1 | 0.0012 | 0.0016 | 0.0005 | Bal. |
| | Molten steel B | 0.06 | 1.3 | 0.8 | 0.0061 | 3.0 | 4.0 | 1.0 | 0.5 | 0.8 | 0.1 | 0.0003 | 0.0013 | 0.0028 | Bal. |
| | After vacuum arc re-melting | 0.05 | 1.2 | 0.5 | 0.0059 | 3.0 | 4.0 | 1.0 | 0.4 | 0.8 | 0.1 | 0.0002 | 0.0009 | 0.0001 | Bal. |

### Explanation of Table 1

In Nos. 1 to 7, no Co was added.

In Nos. 1 to 3, and 7, no Mg was added.

In Nos. 1 to 7, "Bal." (balance) for the Fe amount indicates an amount obtained by subtracting the total amount (% by mass) of the respective components and inevitable impurities in Table 1 from 100% by mass.

As shown in Table 1, in the component composition of the molten steel B obtained in accordance with the production method of the invention, deoxidation (reduction in the amount of O) and denitrification (reduction in the amount of N) proceeded to extremely low levels compared to the component composition of the molten steel A corresponding to the conventional production method.

For example, the amount of O in the molten steel A (and the mold steel obtained by casting the molten steel A) was at a level of a few dozen ppm, while the amount of O in the molten steel B (and the mold steel obtained by casting the molten steel B) was an extremely low level such as several ppm.

In the mold steel of sample No. 7 (after vacuum arc re-melting), the amount of O and the amount of N were further reduced compared to the molten steel B of sample No. 7.

In each of the molten steels, the amount of Al was maintained at 0.8% (objective value) or 0.9%.

In the mold steel of the example of the invention, a small number of inclusions were present in the structure of the steel ingot and the inclusions were fine, compared to the mold steel of the conventional example.

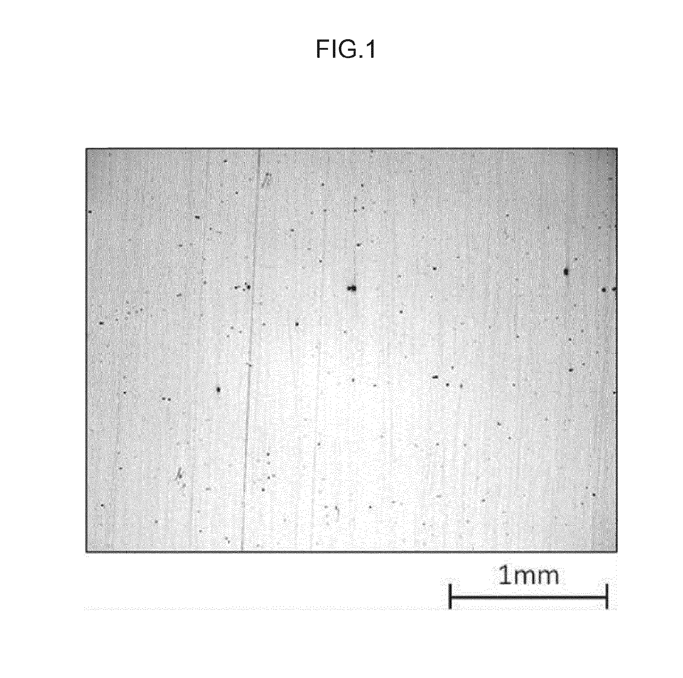

Fig. 1 is an optical micrograph showing the structure of the steel ingot (example of the invention) produced by casting the molten steel B (after slag refining) of sample No. 1.

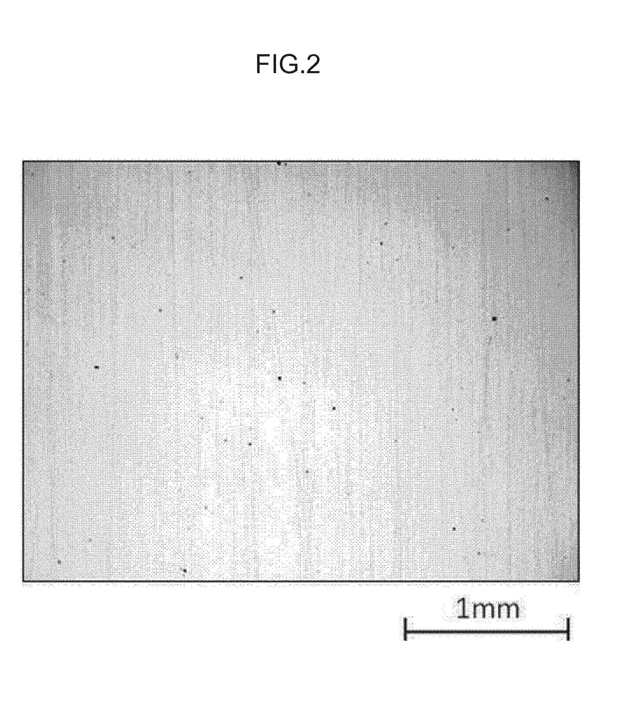

Fig. 2 is an optical micrograph showing the structure of the steel ingot (example of the invention) produced by casting the molten steel B (after slag refining) of sample No. 4.

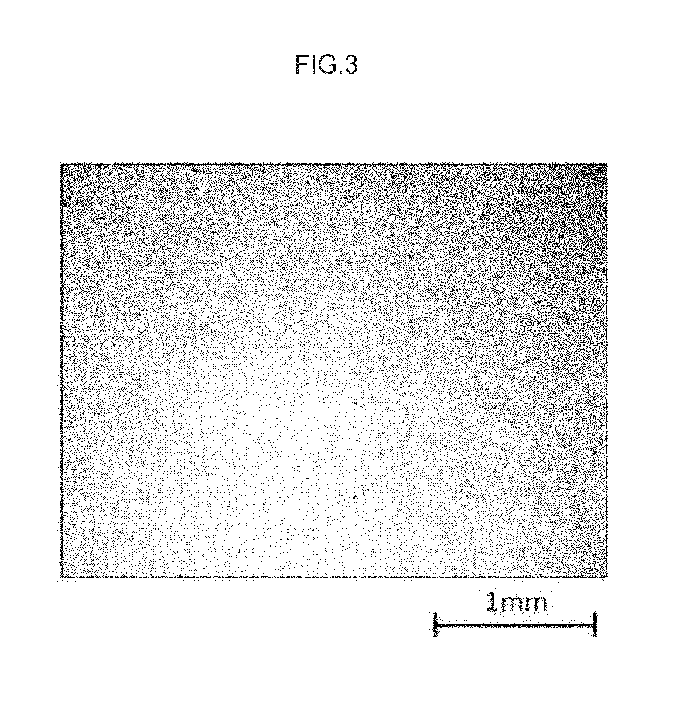

Fig. 3 is an optical micrograph showing the structure of the steel ingot (example of the invention) produced by vacuum arc re-melting the steel ingot obtained after the temporal casting of the molten steel B (after slag refining) of sample No. 7.

In Figs. 1 to 3, the inclusions were confirmed mainly as black spots in the structure.

Particularly in Fig. 3 (sample No. 7), there were a small number of inclusions and the inclusions were fine-structured.

The distribution of the inclusions in the steel ingot structure of sample Nos. 1 to 7 is reflected to the structure of the mold material in a pre-hardened state obtained through subsequent hot working or heat treatment. That is, in the mold material in a pre-hardened state, there is a small number of inclusions and the inclusions were fine-structured.

As shown above, according to the invention, excellent polishability can be achieved and improvement in polishability can be expected in the mold steel having a component composition described in Japanese Patent No. 3351766 or JP-ANo. 2004-091840.

The disclosure of Japanese Patent Application No. 2012-073095 is incorporated herein by reference in its entirety.

All publications, patent applications, and technical standards mentioned in this specification are herein incorporated by reference to the same extent as if each individual publication, patent application, or technical standard was specifically and individually indicated to be incorporated by reference.

## Claims

1. A method of producing a mold steel, the method comprising:
a first process of preparing a molten steel A that is obtained after vacuum refining and has a component composition comprising from 0.005% to 0.1% by mass of C, from 1.0% to 5.0% by mass of Ni, from 3.0% to 8.0% by mass of Cr, more than 0% but less than or equal to 2.0% by mass of Mo, more than 0% but less than or equal to 3.5% by mass of Cu, and more than 0% but less than or equal to 2.0% by mass ofAl, wherein an amount of O is 0.005% by mass or less and an amount of N is 0.03% by mass or less;
a second process of reducing the amount of O and the amount of N in the molten steel A, by slag refining the molten steel A, to obtain a molten steel B; and
a third process of casting the molten steel B.

2. The method of producing a mold steel according to claim 1, wherein the molten steel B comprises more than 0% but less than or equal to 0.05% by mass of S.

3. The method of producing a mold steel according to claim 1 or 2, wherein, in the molten steel B, the amount of O is 0.001% by mass or less and the amount of N is 0.01% by mass or less.

4. The method of producing a mold steel according to any one of claims 1 to 3, wherein the molten steel B comprises more than 0% but less than or equal to 0.05% by mass of S, and the molten steel A comprises more than 0% but less than or equal to 2.0% by mass of Mn.

5. The method of producing a mold steel according to any one of claims 1 to 4, wherein, in the second process, the molten steel B is obtained by adding S to the molten steel A after the slag refining.

6. The method of producing a mold steel according to any one of claims 1 to 5, wherein, in the first process, the molten steel A is prepared by adding Al to a molten steel in which an amount of O and an amount of N have been reduced to 0.005% by mass or less and 0.03% by mass or less, respectively, by vacuum refining such that an amount of Al in the molten steel A is more than 0% but less than or equal to 2.0% by mass.

7. The method of producing a mold steel according to any one of claims 1 to 6, wherein an amount of O in the molten steel A is more than 0.0010% but less than or equal to 0.005% by mass, and an amount of O in the molten steel B is 0.0010% by mass or less.

8. The method of producing a mold steel according to any one of claims 1 to 7, wherein, in the second process, Mg is added to the molten steel A such that an amount of Mg in the molten steel B is more than 0% but less than or equal to 0.02% by mass.

9. The method of producing a mold steel according to claim 8, wherein the addition of Mg is performed by at least one of slag refining of the molten steel A with a slag comprising MgO or adding an Mg alloy to the molten steel A.

10. A method of producing a pre-hardened mold material, the method comprising:
producing a mold steel by the method according to any one of claims 1 to 9;
hot-working the mold steel that has been produced, to obtain a material;
annealing the material after the hot-working; and
quenching and tempering the material after the annealing.

11. A method of producing a pre-hardened mold material, the method comprising:
producing a mold steel by the method according to any one of claims 1 to 9;
hot-working the mold steel that has been produced, to obtain a material;
directly quenching the material during cooling after the hot-working; and
tempering the material after the direct quenching.

12. A mold steel produced by the method according to any one of claims 1 to 7,
the mold steel comprising from 0.005% to 0.1% by mass of C, more than 0% but less than or equal to 3.0% by mass of Si, more than 0% but less than or equal to 2.0% by mass of Mn, 0.05% by mass or less of S (including no addition of S), from 1.0% to 5.0% by mass of Ni, from 3.0% to 8.0% by mass of Cr, more than 0% but less than or equal to 2.0% by mass of Mo, more than 0% but less than or equal to 3.5% by mass of Cu, from 0.1% to 1.5% by mass of Al, and 1.0% by mass or less of Co (including no addition of Co),
wherein an amount of O and an amount of N are limited to 0.001% by mass or less and 0.01% by mass or less, respectively, and
a balance of the mold steel comprising Fe and inevitable impurities.

13. A mold steel produced by the method according to claim 8 or claim 9,
the mold steel comprising from 0.005% to 0.1% by mass of C, more than 0% but less than or equal to 3.0% by mass of Si, more than 0% but less than or equal to 2.0% by mass of Mn, 0.05% by mass or less of S (including no addition of S), from 1.0% to 5.0% by mass of Ni, from 3.0% to 8.0% by mass of Cr, more than 0% but less than or equal to 2.0% by mass of Mo, more than 0% but less than or equal to 3.5% by mass of Cu, from 0.1% to 1.5% by mass of Al, 1.0% by mass or less of Co (including no addition of Co), and more than 0% but less than or equal to 0.02% by mass of Mg,
wherein an amount of O and an amount of N are limited to 0.001% by mass or less and 0.01% by mass or less, respectively, and
a balance of the mold steel comprising Fe and inevitable impurities.

14. A pre-hardened mold material produced by the method according to claim 10 or claim 11,
the pre-hardened mold material comprising from 0.005% to 0.1% by mass of C, more than 0% but less than or equal to 3.0% by mass of Si, more than 0% but less than or equal to 2.0% by mass of Mn, 0.05% by mass or less of S (including no addition of S), from 1.0% to 5.0% by mass of Ni, from 3.0% to 8.0% by mass of Cr, more than 0% but less than or equal to 2.0% by mass of Mo, more than 0% but less than or equal to 3.5% by mass of Cu, from 0.1% to 1.5% by mass ofAl, 1.0% by mass or less of Co (including no addition of Co), and 0.02% by mass or less of Mg (including no addition of Mg),
wherein an amount of O and an amount of N are limited to 0.001% by mass or less and 0.01% by mass or less, respectively, and
a balance of the pre-hardened mold material comprising Fe and inevitable impurities.
